# EUROPÄISCHE PATENTSCHRIFT

(11) **EP 3 044 045 B1**
(45) Veröffentlichungstag und Bekanntmachung des Hinweises auf die Patenterteilung: **27.05.2020**
(21) Anmeldenummer: 14755789.6
(22) Anmeldetag: 07.08.2014
(51) Int. Cl.: B60S 1/34

(54) **BEFESTIGUNGSVORRICHTUNG FÜR EINE SCHEIBENWISCHVORRICHTUNG**
FASTENING DEVICE FOR A WINDSCREEN WIPING DEVICE
DISPOSITIF DE FIXATION POUR DISPOSITIF ESSUIE-GLACE

(30) Priorität: 09.09.2013 DE 102013217985
(43) Veröffentlichungstag der Anmeldung: 20.07.2016
(73) Patentinhaber: Robert Bosch GmbH, 70442 Stuttgart (DE)
(72) Erfinder: HACKL, Viktor, H-9400 Sopron (HU); DEAK, Peter, H-1188 Budapest (HU); WEILER, Michael, 77815 Buehl (DE)
(86) Internationale Anmeldenummer: PCT/EP2014/067005
(87) Internationale Veröffentlichungsnummer: WO 2015/032581

(56) Entgegenhaltungen:
- EP-A1- 1 514 752
- WO-A1-2012/084358
- WO-A1-2013/087121
- JP-U- H0 542 020
- US-A1- 2006 218 740

## Beschreibung

Die Erfindung betrifft eine Scheibenwischvorrichtung für ein Fahrzeug, insbesondere ein Kraftfahrzeug, weiterhin insbesondere eine Befestigungsvorrichtung für eine Scheibenwischvorrichtung.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischerarm über eine Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen.

Üblicherweise treten bei Scheibenwischvorrichtungen, insbesondere bei Wischblättern, durch deren regelmäßige Verwendung Verschleißerscheinungen auf, mit welchen eine Verschlechterung der Wischqualität einhergeht. Darüber hinaus besteht durch die exponierte Lage von Scheibenwischvorrichtungen an der Front- oder Heckscheibe von Kraftfahrzeugen, insbesondere beim Durchfahren einer Waschanlage, die Gefahr, dass die Scheibenwischvorrichtung beschädigt oder sogar abgerissen wird. In diesen Fällen ist es notwendig die verschlissenen oder beschädigten Scheibenwischvorrichtungen auszutauschen. Herkömmlicherweise ist das Austauschen von Scheibenwischvorrichtung relativ aufwendig, da diese üblicherweise über Schraubverbindungen mit der Antriebswelle befestigt sind.

Verschiedene Scheibenwischvorrichtungen sind beispielsweise aus der WO 2012/084358 A1, der US 2006/218740 A1, der EP 1 514 752 A1 und der JP H05 42020 U bekannt.

### Offenbarung der Erfindung

Es ist die Aufgabe der vorliegenden Erfindung, eine Scheibenwischvorrichtung mit einer Befestigungsvorrichtung bereitzustellen, mit welcher zumindest einer oder mehrere der oben genannten Nachteile verringert werden oder im Wesentlichen nicht auftreten.

Diese Aufgabe wird durch die Gegenstände des unabhängigen Anspruchs gelöst.

Gemäß einem Aspekt der vorliegenden Erfindung wird eine Scheibenwisch-vorrichtung für ein Fahrzeug mit einem Befestigungselement, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Ferner umfasst die Scheibenwischvorrichtung eine Befestigungsvorrichtung. Die Befestigungsvorrichtung umfasst ein wischblattseitiges Befestigungsteil. Das wischblattseitige Befestigungsteil ist so konfiguriert, dass mittels einer Rotation des wischblattseitigen Befestigungsteils relativ zum Befestigungselement ein Eingriff ausbildbar ist, um eine Position des wischblattseitigen Befestigungsteils relativ zum Befestigungselement festzulegen, insbesondere lösbar verbindbar festzulegen.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß der hierin beschriebenen Scheibenwischervorrichtung umfassend eine Befestigungsvorrichtung gemäß hierin beschriebenen Ausführungsformen und durch das Verfahren zur Montage der Scheibenwischervorrichtung wird eine Scheibenwischervorrichtung bereitgestellt, welche auf einfache Weise montiert und demontiert werden kann. Dementsprechend kann die Scheibenwischvorrichtung im Falle einer Beschädigung einfach ausgewechselt oder vor dem Durchfahren einer Waschanlage auf einfache Weise entfernt und anschließend wieder montiert werden.

Erfindungsgemäß weist das wischblattseitige Befestigungsteil ein erstes Eingriffselement auf, welches ausgelegt ist um mit einem ersten Sicherungselement des Befestigungselements einen Eingriff zu bilden. Somit wird eine Scheibenwischervorrichtung mit einer Befestigungsvorrichtung bereitgestellt, mit welcher eine Position des wischblattseitigen Befestigungsteils relativ zum Befestigungselement festlegbar ist.

Gemäß optionalen Ausführungsformen der Erfindung, die mit anderen hierin beschriebenen Ausführungsformen kombiniert werden können, erstreckt sich das erste Eingriffselement im Wesentlichen quer zur Längserstreckung des Wischblatts und ist vorzugsweise stiftförmig ausgebildet. Somit wird eine einfache und kostengünstig herstellbare Befestigungsvorrichtung bereitgestellt.

Erfindungsgemäß weist das wischblattseitiges Befestigungsteil ein zweites Eingriffselement auf, welches ausgelegt ist, um mit einem zweiten Sicherungselement des Befestigungselements einen Eingriff zu bilden. Dadurch eine Scheibenwischervorrichtung mit einer Befestigungsvorrichtung bereitgestellt, mit welcher eine Position des wischblattseitigen Befestigungsteils relativ zum Befestigungselement auf besonders stabile Weise festlegbar ist.

Gemäß vorteilhaften Ausführungsformen der Erfindung, die mit anderen hierin beschriebenen Ausführungsformen kombiniert werden können, erstreckt sich das zweite Eingriffselement im Wesentlichen quer zur Längserstreckung des Wischblatts und ist vorzugsweise stiftförmig ausgebildet. Somit wird eine einfache und kostengünstig herstellbare Befestigungsvorrichtung bereitgestellt, mit welcher das wischblattseitige Befestigungsteil relativ zum Befestigungselement auf besonders stabile Weise festlegbar ist.

Erfindungsgemäß ist das erste Sicherungselement als längliche bogenförmige Aussparung, insbesondere als gebogenes Langloch, konfiguriert. Dadurch wird ein besonders einfach und kostengünstig herstellbares erstes Sicherungselement bereitgestellt.

Gemäß vorteihaften Ausführungsformen der Erfindung, die mit anderen hierin beschriebenen Ausführungsformen kombiniert werden können, umfassen das wischblattseitige Befestigungsteil ein erstes Führungselement und das Befestigungselement ein zweites Führungselement, welche konfiguriert sind, um beim Ausbilden des Eingriffs mittels der Rotation des wischblattseitigen Befestigungsteils relativ zum Befestigungselement einen Bewegungsfreiheitsgrad des wischblattseitiges Befestigungsteils senkrecht zur Längserstreckung des Wischblatts im Wesentlichen einzuschränken. Durch eine Befestigungsvorrichtung mit einer Führung gemäß den hierein beschriebenen Ausführungsformen kann der Montage- bzw. Demontagevorgang erleichtert werden. Insbesondere kann ein Verkeilen der Eingriffs- und Sicherungselemente im Wesentlichen vermieden werden.

Gemäß vorteilhaften Ausführungsformen der Erfindung, die mit anderen hierin beschriebenen Ausführungsformen kombiniert werden können, ist das erste Eingriffselement elastisch ausgeführt. Somit wird eine Befestigungsvorrichtung bereitgestellt, mit welcher eine Scheibenwischvorrichtung besonders leicht montiert bzw. demontiert werden kann.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung einer Scheibenwischvorrichtung mit einer Befestigungsvorrichtung gemäß Ausführungsformen der Offenbarung in einem unbefestigten Zustand,
Figur 2 eine schematische Darstellung einer Scheibenwischvorrichtung mit einer Befestigungsvorrichtung nach Figur 1 in einem befestigten Zustand,
Figur 3 eine schematische Darstellung eines Wischblatts mit einem wischblattseitigen Befestigungsteil gemäß Ausführungsformen der Offenbarung,
Figur 4A eine Seitenansicht des Befestigungselements der Befestigungsvorrichtung gemäß Ausführungsformen der Offenbarung,
Figur 4B eine perspektivische Frontansicht des Befestigungselements der Befestigungsvorrichtung gemäß Ausführungsformen der Offenbarung,
Figur 5A eine schematische Darstellung eines Wischblatts einer Scheibenwischvorrichtung gemäß Ausführungsformen der Offenbarung in einer Grundstellung,
Figur 5B eine schematische Darstellung des Wischblatts einer Scheibenwischvorrichtung gemäß Ausführungsformen der Offenbarung nach Fig. 5A in einer an eine Scheibe angelegten Stellung,
Figur 6A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 6B eine schematische Darstellung des Wischerarms mit integriertem Wischblatt nach Fig. 6A in einer an eine Scheibe angelegten Stellung,
Figur 7 eine schematische perspektivische Darstellung eines Wischerarms einer Scheibenwischvorrichtung gemäß Ausführungsformen der Offenbarung,
Figur 8A eine schematische Darstellung eines Ausschnitts des Wischblatts nach Fig. 6A,
Figur 8B eine schematische Darstellung eines Ausschnitts des Wischblatts nach Fig. 6B.
Figur 9 ein Ablaufdiagramm zur Illustration von Ausführungsformen des Verfahrens zur Montage einer Scheibenwischervorrichtung gemäß Ausführungsformen der Offenbarung.

### Ausführungsformen der Erfindung

Im Folgenden werden, sofern nicht anders vermerkt, für gleiche und gleichwirkende Elemente gleiche Bezugszeichen verwendet.

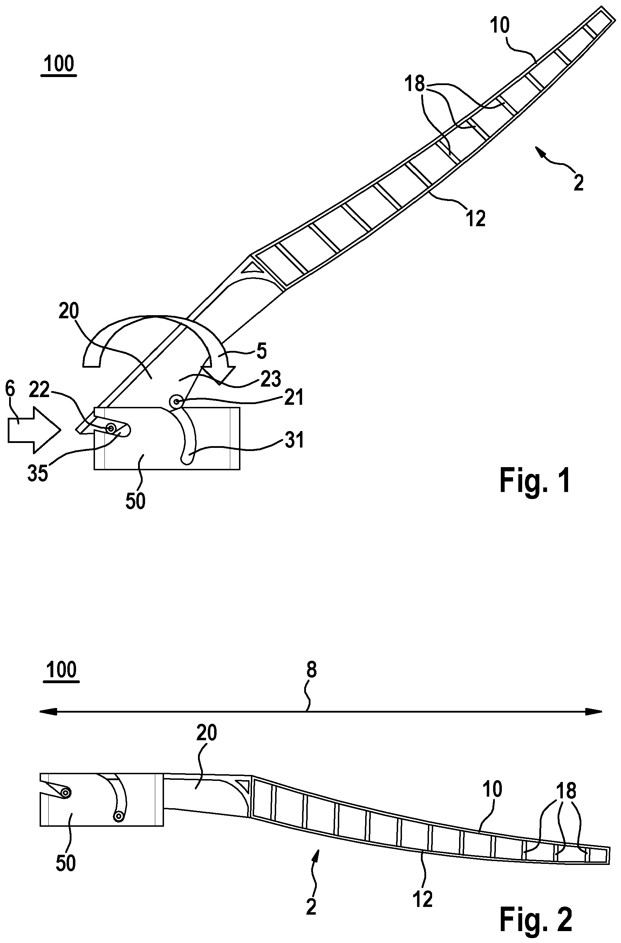

In den Figuren 1 und 2 ist eine Scheibenwischvorrichtung 100 mit einer Befestigungsvorrichtung gemäß Ausführungsformen der Offenbarung schematisch dargestellt. Figur 1 zeigt die Scheibenwischvorrichtung mit der Befestigungsvorrichtung in einem unbefestigten Zustand und Figur 2 in einem befestigten Zustand. Gemäß Ausführungsformen der Offenbarung umfasst die Scheibenwischvorrichtung 100 ein Wischblatt 2 mit einem langgestreckten Oberteil 10 und einem langgestreckten Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 der Scheibenwischvorrichtung 100 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 der Scheibenwischvorrichtung 100 zu ermöglichen. Ferner weist die Scheibenwischvorrichtung eine Befestigungsvorrichtung auf. Die Befestigungsvorrichtung umfasst ein wischblattseitiges Befestigungsteil 20 und ein Befestigungselement 50. Das wischblattseitige Befestigungsteil 20 und das Befestigungselement 50 sind so konfiguriert, dass mittels einer Rotation des wischblattseitigen Befestigungsteils 20 relativ zum Befestigungselement 50 ein Eingriff ausbildbar ist, um eine Position des wischblattseitigen Befestigungsteils 20 relativ zum Befestigungselement 50 festzulegen.

Gemäß Ausführungsformen, die mit anderen Ausführungsformen kombiniert werden können, sind das wischblattseitige Befestigungsteil 20 und das Befestigungselement 50 so konfiguriert, dass durch Rotieren des wischblattseitigen Befestigungsteils 20 relativ zum Befestigungselement 50 um eine Rotationsachse, welche im Wesentlichen quer zur Längserstreckung 8 der Scheibenwischvorrichtung 100 verläuft, eine Position des wischblattseitigen Befestigungsteils 20 relativ zum Befestigungselement 50 festlegbar ist. Eine derartige Rotation zum Befestigen des wischblattseitigen Befestigungsteils 20 an dem Befestigungselement 50 ist in Figur 1 beispielhaft durch den Pfeil 5 veranschaulicht.

Somit wird durch die hierin beschriebenen Ausführungsformen eine Scheibenwischervorrichtung bereitgestellt, welche auf einfache Weise montiert und demontiert werden kann. Dementsprechend kann die Scheibenwischvorrichtung im Falle einer Beschädigung einfach ausgewechselt werden oder vor dem Durchfahren einer Waschanlage auf einfache Weise entfernt und anschließend wieder montiert werden.

Wie beispielhaft in den Figuren 1 bis 3 dargestellt ist, kann das wischblattseitiges Befestigungsteil 20 gemäß Ausführungsformen der Scheibenwischvorrichtung, die mit anderen Ausführungsformen kombiniert werden können, ein erstes Eingriffselement 21 aufweisen. Typischerweise ist das erste Eingriffselement 21 ausgelegt, um mit einem ersten Sicherungselement 31 des Befestigungselements 30 einen Eingriff zu bilden. Gemäß hierin beschriebenen Ausführungsformen kann durch eine Rotation um eine Rotationsachse (siehe Pfeil 5 in Fig. 1), welche im Wesentlichen quer zur Längserstreckung 8 der Scheibenwischvorrichtung 100 verläuft, das erste Eingriffselement 21 mit dem ersten Sicherungselement 31 einen Eingriff ausbilden.

Wie in den Figuren 1 bis 3 beispielhaft gezeigt ist, kann das erste Eingriffselement 21 konfiguriert sein, so dass es sich im Wesentlichen quer zur Längserstreckung 8 der Scheibenwischvorrichtung 100 erstreckt. In bevorzugter Weise erstreckt sich das erste Eingriffselement 21 der Scheibenwischvorrichtung 100 unter einem Winkel von 90° relativ zu Längserstreckung 8. Gemäß Ausführungsformen der Offenbarung kann das erste Eingriffselement 21 stiftförmig ausgebildet sein. Somit kann eine Scheibenwischvorrichtung bereitgestellt werden, welche eine einfache Befestigungsvorrichtung aufweist, so dass das Wischblatt schnell und unkompliziert montiert und demontiert werden kann. Ferner stellen die hierin beschriebenen Ausführungsformen eine kostengünstig herstellbare Scheibenwischvorrichtung zur Verfügung.

Gemäß Ausführungsformen der Scheibenwischvorrichtung, die mit anderen Ausführungsformen kombiniert werden können, kann das wischblattseitige Befestigungsteil 20 ein zweites Eingriffselement 22 aufweisen, wie es beispielhaft in den Figuren 1 bis 3 dargestellt ist. Typischerweise ist das zweite Eingriffselement 22 ausgelegt, um mit einem zweiten Sicherungselement 35 des Befestigungselements 30 einen Eingriff zu bilden. Gemäß hierin beschriebenen Ausführungsformen kann durch eine lineare Bewegung des zweiten Eingriffselements 22 des wischblattseitigen Befestigungsteils 20 relativ zum zweiten Sicherungselement 35 des Befestigungselements 30 ein Eingriff ausgebildet werden. Eine derartige lineare Bewegung des wischblattseitigen Befestigungsteils 20 relativ zum Befestigungselement 50 ist in Figur 1 beispielhaft durch den Pfeil 6 veranschaulicht. Typischerweise legt die Endposition des zweiten Eingriffselements 22, d.h. die Position in welcher das zweite Eingriffselement 22 in dem zweiten Sicherungselement 35 einen Anschlag bildet die Position der Rotationsachse fest, um welche das wischblattseitige Befestigungsteil 20 relativ zum Befestigungselement 50 bei einer Montage oder Demontage gedreht wird.

Gemäß Ausführungsformen der Scheibenwischvorrichtung, die mit anderen Ausführungsformen kombiniert werden können, sind das erste Eingriffselement 21 und das zweite Eingriffselement 22 des wischblattseitigen Befestigungsteils 20 derart relativ zueinander angeordnet, dass beim Ausbilden eines Eingriffs des ersten Eingriffselements 21 mit dem ersten Sicherungselement 31 und beim Ausbilden eines Eingriffs des zweiten Eingriffselements 22 mit dem zweiten Sicherungselement 35 eine Spannungszustand der Eingriffselemente 21, 22 entsteht.

Gemäß Ausführungsformen der Scheibenwischvorrichtung, die mit anderen Ausführungsformen kombiniert werden können, kann das erste Eingriffselement 21 und/ oder das zweite Eingriffselement 22 des wischblattseitigen Befestigungsteils 20 elastisch ausgeführt sein. Dadurch kann eine im Wesentlichen kontinuierliche Ausbildung des Spannungszustands der Eingriffselemente beim Befestigen des wischblattseitigen Befestigungsteils 20 mit dem Befestigungselement 50 erreicht werden.

Wie in den Figuren 1 bis 3 beispielhaft gezeigt ist, kann das zweite Eingriffselement 22 konfiguriert sein, so dass es sich im Wesentlichen quer zur Längserstreckung 8 der Scheibenwischvorrichtung 100 erstreckt. In bevorzugter Weise erstreckt sich das zweite Eingriffselement 22 der Scheibenwischvorrichtung 100 unter einem Winkel von 90° relativ zu Längserstreckung 8. Ebenso wie das erste Eingriffselement 21 kann das zweite Eingriffselement 22 stiftförmig ausgebildet sein. Somit kann gemäß den hierein beschriebenen Ausführungsformen eine besonders effektive und stabile Befestigungsvorrichtung für eine Scheibenwischvorrichtung bereitgestellt werden.

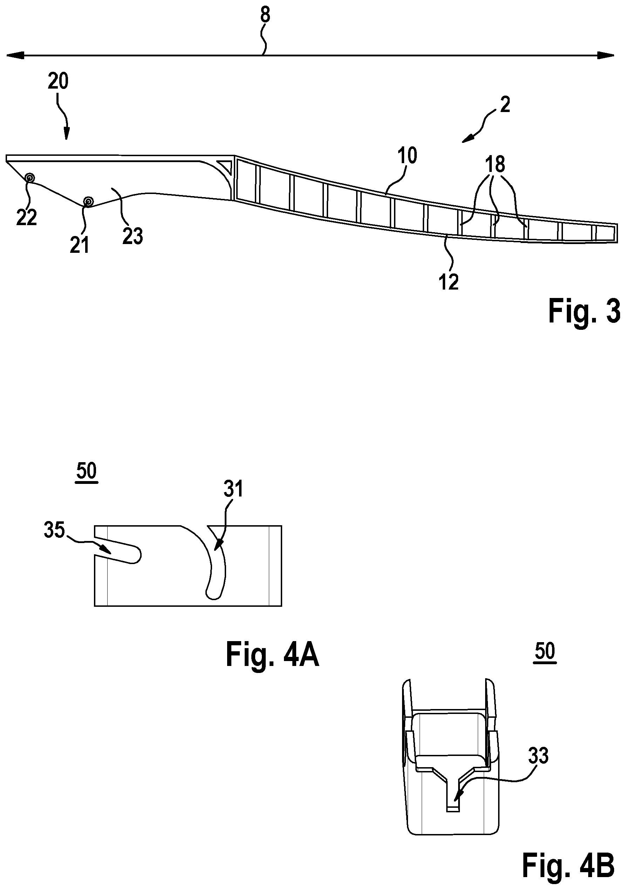

Gemäß Ausführungsformen der Scheibenwischvorrichtung, die mit anderen Ausführungsformen kombiniert werden können, weist das wischblattseitige Befestigungsteil 20 ein erstes Führungselement 23 auf. Wie in Figur 3 beispielhaft dargestellt ist, kann das erste Führungselement 23 als Steg ausgeführt sein, welcher sich im Wesentlichen entlang einer Längserstreckung 8 der Scheibenwischvorrichtung 100 erstreckt. Typischerweise ist das erste Führungselement 23 bezüglich der Breite der Scheibenwischervorrichtung 100 mittig angeordnet. Des Weiteren ist gemäß hierin beschrieben Ausführungsformen das erste Führungselement 23 des wischblattseitigen Befestigungsteils 20 derart konfiguriert, um mit einem zweiten Führungselement 33 des Befestigungselements 30 eine geführte Rotationsbewegung und/ oder geführte Linearbewegung des wischblattseitigen Befestigungsteils 20 relativ zum Befestigungselement 50 zu ermöglichen. Ein beispielhaftes zweites Führungselement 33 des Befestigungselements 30 gemäß Ausführungsformen der Scheibenwischvorrichtung ist in Figur 4B dargestellt. Gemäß typischen Ausführungsformen ist das zweite Führungselement 33 des Befestigungselements 30 als Schlitz konfiguriert, so dass das als Steg ausgeführte erste Führungselement 23 in einer Ebene in Richtung der Längserstreckung 8 der Scheibenwischvorrichtung bei Montage bzw. Demontage geführt werden kann.

Typischerweise sind das erste Führungselement 23 des wischblattseitigen Befestigungsteils 20 und das zweite Führungselement 33 des Befestigungselements 30, konfiguriert, um beim Ausbilden des Eingriffs mittels der Rotation des wischblattseitigen Befestigungsteils 20 relativ zum Befestigungselement 50 einen Bewegungsfreiheitsgrad des wischblattseitiges Befestigungsteils 20 in eine Richtung entlang der Rotationsachse der Rotationsbewegung beim Ausbilden des Eingriffs im Wesentlichen einzuschränken. Durch eine Befestigungsvorrichtung mit einer Führung gemäß den hierein beschriebenen Ausführungsformen kann der Montage- bzw. Demontagevorgang erleichtert werden. Insbesondere kann ein Verkeilen der Eingriffs- und Sicherungselemente im Wesentlichen vermieden werden.

In Figur 4 ist beispielhaft das Befestigungselement 50 der Befestigungsvorrichtung gemäß Ausführungsformen der Offenbarung dargestellt, wobei Figur 4A eine Seitenansicht und Figur 4B eine perspektivische Frontansicht des Befestigungselements 30 der Befestigungsvorrichtung zeigt. Typischerweise ist das erste Sicherungselement 31 so konfiguriert, dass beim Ausbilden eines Eingriffs des ersten Eingriffselements 21 mit dem ersten Sicherungselement 31 ein Spannungszustand des ersten Eingriffselements 21 ausgebildet wird. Beispielsweise kann das erste Sicherungselement 31 als längliche bogenförmige Aussparung, insbesondere als gebogenes Langloch, konfiguriert sein. Typischerweise ist die bogenförmige Aussparung derart konfiguriert, dass ein Abstand zwischen der Kontaktfläche des zweiten Eingriffselements 22 mit dem zweiten Sicherungselement 35 und der Kontaktfläche des ersten Eingriffselements 21 mit dem ersten Sicherungselement 31 zunimmt. Typischerweise ist die Zunahme des Abstands zwischen der Kontaktfläche des zweiten Eingriffselements 22 mit dem zweiten Sicherungselement 35 und der Kontaktfläche des ersten Eingriffselements 21 mit dem ersten Sicherungselements 31 kontinuierlich, wobei in einem befestigten Zustand der Schiebenwischvorrichtung der besagte Abstand zwischen den Kontaktflächen größer ist als der Abstand zwischen dem ersten Eingriffselement 21 und dem zweiten Eingriffselement 22 des wischblattseitigen Befestigungsteils 20 in einem nicht befestigten Zustand. Somit entsteht im befestigten Zustand ein Spannungszustand der Eingriffselemente.

Gemäß Ausführungsformen der Offenbarung, die mit anderen hierin beschriebenen Ausführungsformen kombiniert werden können, ist die bogenförmige Aussparung, beispielsweise ein gebogenes Langloch, derart konfiguriert, dass beim Ausbilden eines Eingriffs des ersten Eingriffselements 21 mit dem ersten Sicherungselement 31 ein Abstand zwischen der Kontaktfläche des zweiten Eingriffselements 22 mit dem zweiten Sicherungselement 35 und der Kontaktfläche des ersten Eingriffselements 21 mit dem ersten Sicherungselement 31 zunächst zunimmt bis ein maximaler Abstand erreicht wird und anschließend wieder bis zu einer Rastposition abnimmt. Typischerweise ist die Zunahme und/ oder die Abnahme des Abstands zwischen der Kontaktfläche des zweiten Eingriffselements 22 mit dem zweiten Sicherungselement 35 und der Kontaktfläche des ersten Eingriffselements 21 mit dem ersten Sicherungselements 31 kontinuierlich, wobei in einem befestigten Zustand der Schiebenwischvorrichtung der besagte Abstand zwischen den Kontaktflächen größer ist als der Abstand zwischen dem ersten Eingriffselement 21 und dem zweiten Eingriffselement 22 des wischblattseitigen Befestigungsteils 20 in einem nicht befestigten Zustand. Somit entsteht im befestigten Zustand ein Spannungszustand der Eingriffselemente.

Durch die Konfiguration einer hierein beschrieben Befestigungsvorrichtung, in welcher der Abstand zwischen der Kontaktfläche des zweiten Eingriffselements 22 mit dem zweiten Sicherungselement 35 und der Kontaktfläche des ersten Eingriffselements 21 mit dem ersten Sicherungselement 31 beim Ausbilden eines Eingriffs zunächst zunimmt und anschließend abnimmt, muss beim Ausbilden des Eingriffs ein maximaler Spannungszustand überwunden werden, so dass ein Einrast- bzw. Schnappmechanismus, insbesondere ein kontinuierlicher Einrast- bzw. Schnappmechanismus bereitgestellt wird. Typischerweise wird beim Überwinden des maximalen Spannungszustands das erste Eingriffselement elastisch deformiert. Somit wird eine Befestigungsvorrichtung bereitgestellt, mit welcher eine Scheibenwischvorrichtung besonders leicht montiert bzw. demontiert werden kann.

Im Folgenden werden beispielhafte Ausführungsformen einer Scheibenwischvorrichtung beschrieben, für welche die hierein beschriebene Befestigungsvorrichtung vorteilhafterweise verwendet werden kann. Grundsätzlich, kann die hierein beschriebene Befestigungsvorrichtung jedoch auch für andere Scheibenwischvorrichtung verwendet werden.

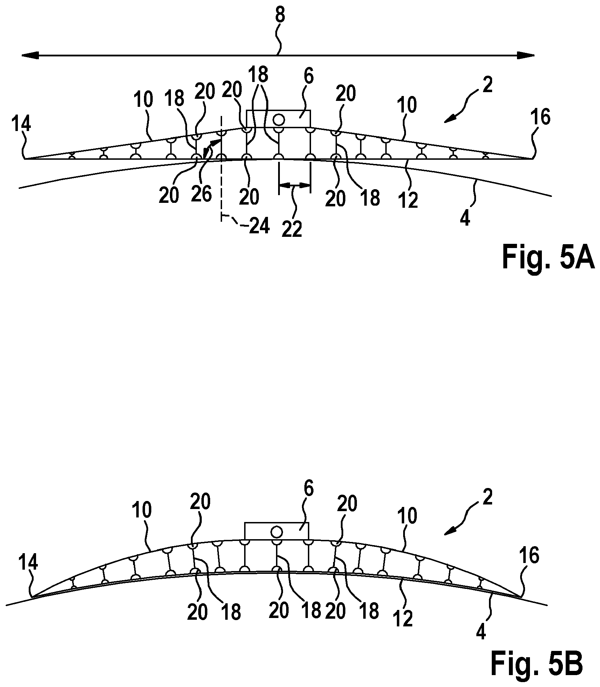

Figuren 5A und 5B zeigen schematische Darstellungen eines Wischblatts 2 in einer Grundstellung (Figur 5A) und in einer an eine Scheibe angelegten Stellung (Figur 5B) gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 5A in einer Grundstellung, in der sie zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in den Figuren 5A und 5B exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, das Oberteil 10 zweiteilig ausgestaltet, wobei dann jeweils ein Ende der beiden Teile des zweiteiligen Oberteils 10 an der Halterung 6 befestigt sind.

Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Drehgelenken 20 befestigt. Die Drehgelenke 20 sind hier Scharniere. Insbesondere können die Drehgelenke 20 als Filmscharniere ausgebildet sein. Dies ist vor allem dann vorteilhaft, wenn Oberteil 10, Unterteil 12 und/oder Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen das Gelenk durch ein Filmscharnier zur Verfügung gestellt ist, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben ist die Scheibenwischvorrichtung, insbesondere das Wischblatt aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt. Die Filmscharniere können eine hohe Dehnbarkeit aufweisen. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

In Figur 5A ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 65° und 115°, insbesondere zwischen 75° und 105°, liegen. Besonders vorteilhaft liegen die Winkel zwischen 80° und 100°. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Entsprechendes gilt für die Befestigungen der Verbindungselemente 18 an dem Oberteil 10.

In der Fig. 5A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 5A einen Doppelkeil aus, wobei die Spitzen der beiden Keile in entgegengesetzte Richtungen weisen. Die Verbindungselemente 18 sind knicksteif ausgeführt.

Fig. 5B zeigt eine schematische Darstellung des Wischblatts 2 nach Fig. 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Drehgelenke an der Verbindung zwischen den Verbindungselementen und dem Ober- bzw. Unterteil gegeben.

In der Darstellung nach Fig. 5B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich typischerweise an der dem Oberteil 10 abgewandten Unterseite des Unterteils 12 eine Wischlippe, welche zum Wischen auf der Scheibe 4 aufsetzt. Aus Gründen der Übersichtlichkeit ist die Wischlippe in den Figuren 5A und 5B nicht dargestellt.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

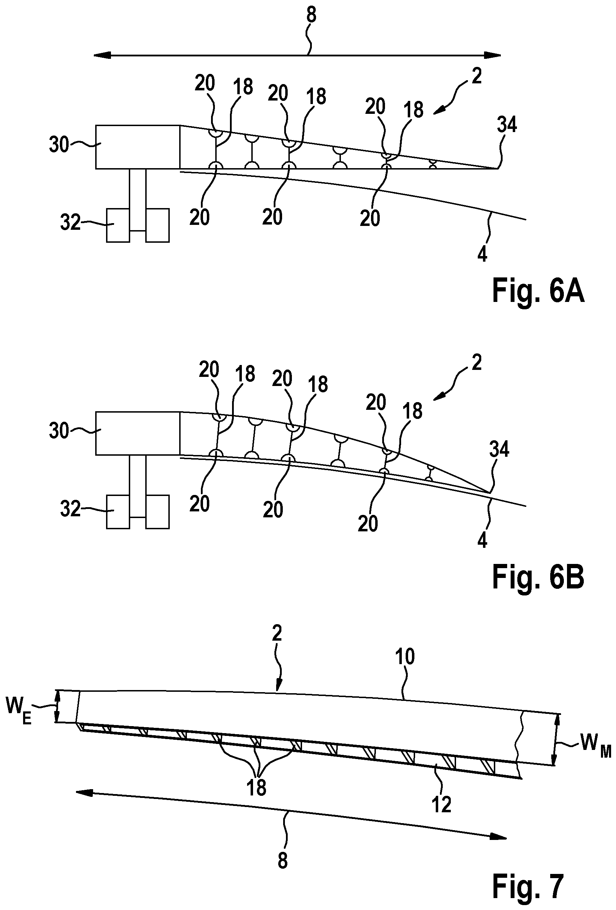

Figuren 5A und 5B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann eine Scheibenwischvorrichtung jedoch auch nur eine Verbindungsposition aufweisen, was in Analogie zu den Figuren 5A und 5B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 6A und 6B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 6A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 2, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 2 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 6A prinzipiell derjenigen nach Fig. 5A.

Fig. 6B zeigt eine schematische Darstellung des Wischblatts 2 mit integriertem Wischerarm 30 nach Fig. 5B in einer an die Scheibe 4 angelegten Stellung. Auch hier wirken von unten aus der Richtung der Scheibe 4 Druckkräfte auf das Unterteil 12 des Wischblatts 2, so dass sich das Unterteil 12 und das Oberteil 10 in Richtung der Scheibe 4 biegen.

Sowohl in FIG. 5A als auch in FIG. 6A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Figur 7 eine schematische perspektivische Darstellung eines Wischblatts 2 einer Scheibenwischvorrichtung gemäß Ausführungsformen der Offenbarung. Wie in Figur 7 dargestellt ist, weist das Wischblatt 2 an den äußeren Verbindungspositionen, an welchem die Enden des langgestreckten Oberteils 10 und des Unterteils 12 miteinander verbunden sind eine äußere Breite W_{E} auf. Gemäß typischen Ausführungsformen ist die äußere Breite W_{E} mindestens 15 mm, insbesondere mindestens 20 mm, insbesondere mindestens 25 mm.

Gemäß Ausführungsformen der Offenbarung, die mit anderen Ausführungsformen kombiniert werden können, nimmt die Breite des Wischblatts 2 von den äußeren Verbindungspositionen in Richtung des Befestigungsteils 30 oder der Halterung 6, an der das Wischblatt an dem Scheibenwischerarm befestigt werden kann, zu. In Figur 7 ist beispielhaft eine innere Breite mit W_{M} bezeichnet. Gemäß typischen Ausführungsformen ist die innere Breite W_{M} mindestens 20 mm, insbesondere mindestens 25 mm, insbesondere mindestens 30 mm.

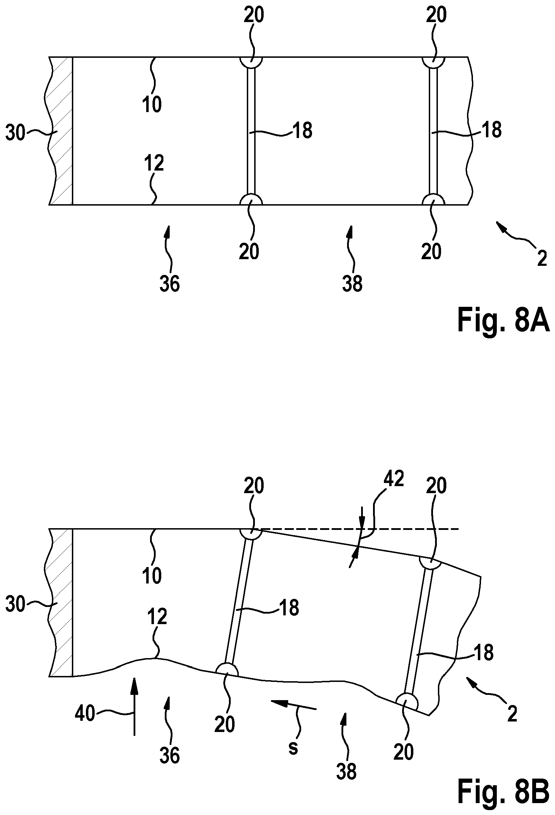

Fig. 8A zeigt eine schematische Darstellung eines Ausschnitts des Wischblatts 2 gemäß dem Ausführungsbeispiel nach Fig. 6A, in dem sich das Wischblatt 2 in der Grundstellung befindet. Dargestellt ist der linke Endbereich des Wischblatts 2, in dem ein Ende des Oberteils 10 und ein Ende des Unterteils 12 an dem Befestigungsteil 30 befestigt sind. Fig. 8A zeigt ausgehend von dem Übergang vom Befestigungsteil 30 zu dem Wischblatt 2 die ersten beiden Verbindungselemente 18, die zwei Wischblattelemente 36 und 38 begrenzen. Die Verbindungselemente 18 sind über Drehgelenke 20 an dem Oberteil 10 und dem Unterteil 12 befestigt.

Fig. 8B zeigt eine schematische Darstellung eines Ausschnitts des Wischblatts 2 gemäß dem Ausführungsbeispiel nach Fig. 6B, in dem das Wischblatt 2 an die Scheibe 4 angelegt ist. Es wirken von unten aus Richtung der Scheibe Druckkräfte auf das Unterteil 12. Stellvertretend für die Druckkräfte ist in der Fig. 8B eine Druckkraft 40 dargestellt. Die Druckkraft 40 bewirkt ein Wölben und Verbiegen des Unterteils 12 des Wischblattelements 36. Dadurch wird das Drehgelenk 20 des ersten Verbindungselements 18 um einen Weg s nach links verschoben. Das zweite Wischblattelement 38 biegt sich nach unten in die Richtung, aus der die Druckkraft 40 kommt, und schmiegt sich an die Scheibe an. Dabei entsteht zwischen dem ersten Wischblattelement 36 und dem zweiten Wischblattelement 38 ein Winkel 42. Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 2.

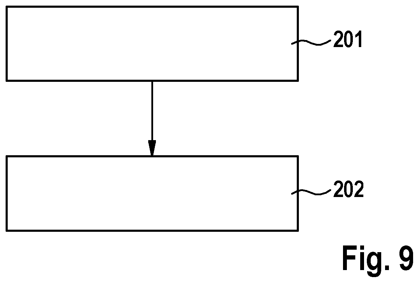

Zur Illustration von Ausführungsformen des Verfahrens zur Montage einer Scheibenwischervorrichtung ist in Figur 9 ein Ablaufdiagramm dargestellt. Gemäß Ausführungsformen des Verfahrens umfasst das Verfahren ein Bereitstellen 201 einer Scheibenwischervorrichtung gemäß den hierin beschriebenen Ausführungsformen. Des Weiteren umfasst das ein Befestigen 202 des wischblattseitigen Befestigungsteils 20 an dem Befestigungselement 50 durch Ausbilden eines Eingriffs des wischblattseitigen Befestigungsteils 20 mit dem Befestigungselement 50 und Rotieren des wischblattseitigen Befestigungsteils relativ zum Befestigungselement um eine Rotationsachse, welche im Wesentlichen quer zur Längserstreckung 8 der Scheibenwischvorrichtung 100 verläuft.

Gemäß Ausführungsformen des Verfahrens zur Montage einer Scheibenwischervorrichtung, umfasst das Befestigen 202 des wischblattseitigen Befestigungsteils 20 an dem Befestigungselement 50 ferner ein elastisches Verformen des ersten Eingriffselements 21 und/oder des zweiten Eingriffselements 22.

Gemäß Ausführungsformen des Verfahrens zur Montage einer Scheibenwischervorrichtung, die mit anderen Ausführungsformen kombiniert werden können, umfasst das Befestigen 202 des wischblattseitigen Befestigungsteils 20 an dem Befestigungselement 50 das Ausbilden eines Spannungszustands des ersten Eingriffselements 21 und/oder des zweiten Eingriffselements 22. Dabei sind das erste Eingriffselement 21 und das zweite Eingriffselement 22 des wischblattseitigen Befestigungsteils 20 sowie das erste Sicherungselement 31 und das zweite Sicherungselement 35 des Befestigungselements gemäß den hierin beschriebenen Ausführungsformen konfiguriert.

Somit wird durch die hierin beschriebenen Ausführungsformen der Scheibenwischervorrichtung und durch das Verfahren zur Montage der Scheibenwischervorrichtung eine Scheibenwischervorrichtung bereitgestellt, welche auf einfache Weise montiert und demontiert werden kann. Dementsprechend kann die Scheibenwischvorrichtung im Falle einer Beschädigung einfach ausgewechselt oder vor dem Durchfahren einer Waschanlage auf einfache Weise entfernt und anschließend wieder montiert werden.

## Patentansprüche

1. Scheibenwischvorrichtung (100) für ein Fahrzeug mit einem Befestigungselement (50), insbesondere ein Kraftfahrzeug, umfassend ein Wischblatt mit
- einem langgestreckten Oberteil (10), das zumindest teilweise biegbar ausgestaltet ist,
- einem langgestreckten Unterteil (12), das zumindest teilweise biegbar ausgestaltet ist,
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, und wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen, und
- einer Befestigungsvorrichtung umfassend ein wischblattseitiges Befestigungsteil (20), wobei das wischblattseitiges Befestigungsteil (20) konfiguriert ist, so dass mittels einer Rotation des wischblattseitigen Befestigungsteils (20) relativ zum Befestigungselement (50) ein Eingriff ausbildbar ist, um eine Position des wischblattseitigen Befestigungsteils (20) relativ zum Befestigungselement (50) festzulegen, insbesondere lösbar verbindbar festzulegen,
- wobei das wischblattseitige Befestigungsteil (20) ein erstes Eingriffselement (21) aufweist, um mit einem ersten, als längliche bogenförmige Aussparung konfigurierten Sicherungselement (31) des Befestigungselements (50) einen Eingriff zu bilden und ein zweites Eingriffselement (22) aufweist, um mit einem zweiten Sicherungselement (35) Befestigungselements (50) einen Eingriff zu bilden,
- wobei beim Ausbilden eines Eingriffs des ersten Eingriffselements (21) mit dem ersten Sicherungselement (31) ein Abstand zwischen einer Kontaktfläche des zweiten Eingriffselements (22) mit dem zweiten Sicherungselement (35) und einer Kontaktfläche des ersten Eingriffselements (21) mit dem ersten Sicherungselement (31) zunächst zunimmt bis ein maximaler Abstand erreicht wird und anschließend wieder bis zu einer Rastposition abnimmt.

2. Scheibenwischvorrichtung (100) nach Anspruch 1, wobei sich das erste Eingriffselement (21) im Wesentlichen quer zur Längserstreckung (8) des Wischblatts (2) erstreckt und vorzugsweise stiftförmig ausgebildet ist.

3. Scheibenwischvorrichtung (100) nach Anspruch 1, wobei sich das zweite Eingriffselement (22) im Wesentlichen quer zur Längserstreckung (8) des Wischblatts (2) erstreckt und vorzugsweise stiftförmig ausgebildet ist.

4. Scheibenwischvorrichtung (100) nach einem der Ansprüche 1 bis 3, wobei das wischblattseitige Befestigungsteil (20) ein erstes Führungselement (23) und das Befestigungselement (50) ein zweites Führungselement (33) umfassen, welche konfiguriert sind, um beim Ausbilden des Eingriffs mittels der Rotation des wischblattseitigen Befestigungsteils (20) relativ zum Befestigungselement (50) einen Bewegungsfreiheitsgrad des wischblattseitiges Befestigungsteils (20) senkrecht zur Längserstreckung (8) des Wischblatts (2) im Wesentlichen einzuschränken.

5. Scheibenwischvorrichtung (100) nach einem der Ansprüche 1 bis 4, wobei das erste Eingriffselement (21) elastisch ausgeführt ist.

## Claims

1. Windscreen wiping device (100) for a vehicle having a fastening element (50), in particular a motor vehicle, comprising a wiper blade having
- an elongate upper part (10) which is configured to be at least partially bendable,
- an elongate lower part (12) which is configured to be at least partially bendable,
- a plurality of connecting elements (18) for connecting the upper part (10) and the lower part (12), wherein the connecting elements (18) are spaced apart from one another along a longitudinal extent (8) of the wiper blade (2), and wherein the connecting elements (18) are designed to allow a movement of the upper part (10) and of the lower part relative to one another with a movement component along a longitudinal extent (8) of the wiper blade (2), and
- a fastening device comprising a wiper-blade-side fastening part (20), wherein the wiper-blade-side fastening part (20) is configured such that, by means of a rotation of the wiper-blade-side fastening part (20) relative to the fastening element (50), an engagement can be formed in order to fix a position of the wiper-blade-side fastening part (20) relative to the fastening element (50), in particular to fix it in a releasably connectable manner,
- wherein the wiper-blade-side fastening part (20) has a first engagement element (21) in order to form an engagement with a first securing element (31) of the fastening element (50), said securing element being configured as an elongate arcuate cutout, and has a second engagement element (22) in order to form an engagement with a second securing element (35) of the fastening element (50),
- wherein, upon formation of an engagement of the first engagement element (21) with the first securing element (31), a spacing between a contact surface of the second engagement element (22) with the second securing element (35) and a contact surface of the first engagement element (21) with the first securing element (31) first of all increases until a maximum spacing is reached and then decreases again up to a latching position.

2. Windscreen wiping device (100) according to Claim 1, wherein the first engagement element (21) extends substantially transversely with respect to the longitudinal extent (8) of the wiper blade (2) and is preferably pin-shaped in form.

3. Windscreen wiping device (100) according to Claim 1, wherein the second engagement element (22) extends substantially transversely with respect to the longitudinal extent (8) of the wiper blade (2) and is preferably pin-shaped in form.

4. Windscreen wiping device (100) according to one of Claims 1 to 3, wherein the wiper-blade-side fastening part (20) comprises a first guide element (23), and the fastening element (50) comprises a second guide element (33), which guide elements are configured, upon formation of the engagement by means of the rotation of the wiper-blade-side fastening part (20) relative to the fastening element (50), to substantially limit a movement degree of freedom of the wiper-blade-side fastening part (20) perpendicular to the longitudinal extent (8) of the wiper blade (2).

5. Windscreen wiping device (100) according to one of Claims 1 to 4, wherein the first engagement element (21) is configured to be elastic.

## Revendications

1. Dispositif essuie-glace (100) pour un véhicule comprenant un élément de fixation (50), notamment un véhicule automobile, comprenant un balai d'essuie-glace muni
- d'une partie supérieure étendue longitudinalement (10), qui est au moins partiellement configurée sous forme flexible,
- d'une partie inférieure étendue longitudinalement (12), qui est au moins partiellement configurée sous forme flexible,
- de plusieurs éléments de liaison (18) pour relier la partie supérieure (10) et la partie inférieure (12), les éléments de liaison (18) étant espacés les uns des autres le long d'une extension longitudinale (8) du balai d'essuie-glace (2), et les éléments de liaison (18) étant conçus pour permettre un mouvement de la partie supérieure (10) et de la partie inférieure l'une par rapport à l'autre avec un composant de mouvement le long d'une extension longitudinale (8) du balai d'essuie-glace (2), et
- d'un dispositif de fixation comprenant une partie de fixation (20) côté balai d'essuie-glace, la partie de fixation (20) côté balai d'essuie-glace étant configurée de telle sorte qu'une mise en prise puisse être formée au moyen d'une rotation de la partie de fixation (20) côté balai d'essuie-glace par rapport à l'élément de fixation (50), afin de définir, notamment de définir d'une manière pouvant être reliée de manière amovible, une position de la partie de fixation (20) côté balai d'essuie-glace par rapport à l'élément de fixation (50),
- la partie de fixation (20) côté balai d'essuie-glace comprenant un premier élément de mise en prise (21), afin de former une mise en prise avec un premier élément de sécurisation (31) de l'élément de fixation (50) configuré sous la forme d'un évidement en forme d'arc longitudinal, et comprenant un deuxième élément de mise en prise (22), afin de former une mise en prise avec un deuxième élément de sécurisation (35) de l'élément de fixation (50),
- lors de la formation d'une mise en prise du premier élément de mise en prise (21) avec le premier élément de sécurisation (31), un écart entre une surface de contact du deuxième élément de mise en prise (22) avec le deuxième élément de sécurisation (35) et une surface de contact du premier élément de mise en prise (21) avec le premier élément de sécurisation (31) augmentant tout d'abord jusqu'à ce qu'un écart maximal soit atteint, puis diminuant de nouveau jusqu'à une position d'arrêt.

2. Dispositif essuie-glace (100) selon la revendication 1, dans lequel le premier élément de mise en prise (21) s'étend essentiellement perpendiculairement à l'extension longitudinale (8) du balai d'essuie-glace (2) et est de préférence configuré sous la forme d'une tige.

3. Dispositif essuie-glace (100) selon la revendication 1, dans lequel le deuxième élément de mise en prise (22) s'étend essentiellement perpendiculairement à l'extension longitudinale (8) du balai d'essuie-glace (2) et est de préférence configuré sous la forme d'une tige.

4. Dispositif essuie-glace (100) selon l'une quelconque des revendications 1 à 3, dans lequel la partie de fixation (20) côté balai d'essuie-glace comprend un premier élément de guidage (23) et l'élément de fixation (50) comprend un deuxième élément de guidage (33), qui sont configurés pour essentiellement limiter un degré de liberté de mouvement de la partie de fixation (20) côté balai d'essuie-glace perpendiculairement à l'extension longitudinale (8) du balai d'essuie-glace (2) lors de la formation de la mise en prise au moyen de la rotation de la partie de fixation (20) côté balai d'essuie-glace par rapport à l'élément de fixation (50) .

5. Dispositif essuie-glace (100) selon l'une quelconque des revendications 1 à 4, dans lequel le premier élément de mise en prise (21) est configuré sous forme élastique.
